(19) Europäisches Patentamt / European Patent Office / Office européen des brevets

(11) **EP 3 351 718 A1**

(12) **EUROPEAN PATENT APPLICATION**
published in accordance with Art. 153(4) EPC

(43) Date of publication:
**25.07.2018 Bulletin 2018/30**

(51) Int Cl.:
***E06B 7/02*** (2006.01)          ***F04D 25/08*** (2006.01)
***F04D 29/70*** (2006.01)          ***F24F 13/28*** (2006.01)

(21) Application number: **16845698.6**

(22) Date of filing: **13.09.2016**

(86) International application number:
**PCT/CN2016/098851**

(87) International publication number:
**WO 2017/045584 (23.03.2017 Gazette 2017/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **14.09.2015 CN 201510581044**

(71) Applicant: **Qingdao Randall Aerodynamics Engineering, LLC**
**Chuang Ye da Sha 501**
**Jiaozhou City**
**266000 (CN)**

(72) Inventor: **RANDALL, Ryan Michael**
**Qingdao**
**Shandong 266002 (CN)**

(74) Representative: **Rees, Kerry**
**WP Thompson**
**138 Fetter Lane**
**London EC4A 1BT (GB)**

(54) **VENTILATION PURIFIER**

(57)     The present invention discloses an air purifier that includes a fan characterized by: a prefilter, (9) located upstream of the fan, a filter (16) located downstream of the fan, a seat (23) below the fan, and a docking ring (4). The system is height and tilt adjustable (11). Said fan includes a housing (15), a fan (6), and a motor (13). The motor (13) is held at the center of the housing (15) by radial supports and/or guide vanes (5), the fan (6) is mounted on the output shaft of the motor (13). The present invention is economical, practical, easy to install, efficient, and can be directly used for: ventilation + filtration, pure ventilation, or pure filtration.

FIG 1

**Description**

TECHNICAL FIELD

The present invention relates to the field of air purification, in particular to ventilating purifiers.

BACKGROUND TECHNIQUE

People have to breathe oxygen, so some ventilation is required for all occupied structures. There are numerous health concerns associated with excessive air pollution, so air filtration is also important. There are many existing filtration systems that utilize different filtration strategies, but they are generally either expensive, ineffective, and/or inefficient. Existing ventilation-and-filtration devices filter outdoor air before it enters a structure, but they have many problems. They utilize long, unsightly, and expensive-to-install ducts that run from a central location to each room, which makes them impractical and/or unaffordable for many lower-income people and for temporary renters and leasers of space, especially when adding construction costs associated with covering the unsightly ducts. The corners, bends, and length of the ducting results in additional aerodynamic losses that reduce the overall energy efficiency of the system. Furthermore, these systems require many screwholes to be put into walls and ceilings to anchor ducting, and at least one large hole to be drilled through a wall for the duct. These holes damage the building; over time stress concentrations and fluctuating loads may cause crack growth and propagation through the wall. Over time dust accumulating inside the long ducts, which are difficult to clean, increases the aerodynamic drag for ventilation.

Many purifiers and ventilating purifiers use custom, oddly-sized or oddly-shaped filters to allow the company to charge higher prices for replacement filters. This increasess the cost to consumers. Furthermore, if the custom filters become unavailable for any reason then the entire system becomes unusable and has to be discarded.

Existing ventilating purifiers cannot typically be used as strictly purifiers, or strictly ventilators, in a convenient fashion. As a result, if a user would like these options they have to find and purchase additional systems.

SUMMARY OF THE INVENTION

The present invention overcomes the deficiencies of the prior art, providing efficient ventilation and filtration. It is an easy to install, economical, and practical ventilating purifier.

To achieve the above object, the present invention adopts the following technical scheme: a ventilation purifier equipped with a prefilter (9) and a main filter (16), characterized by a docking ring (4) at the outer edge of the inlet side of the fan, and a seat (23) below the fan. Said fan may be an axial fan or a centrifugal fan, both of whose assemblies consist of a housing (15), the fan (6), and the motor (13), where the fan (6) is mounted on the output shaft of the motor (13), and the motor is located in the center of the housing (15).

All embodiments have a filter (16), which may or may not be able to filter PM 2.5 particles. The filter (16) is mounted into the filter housing (3). The system has a seat (23) on which the housing (15) and other components rest. The seat (23) may be provided with a height and tilt adjuster (11). The height and tilt adjuster (11) may consist of two pairs of threaded elements symmetrically disposed about the seat (23) for both height and tilt adjustment, or the height adjustment may be separately achieved utilizing an inner and outer tube that slide relative to one another. All embodiments of the present invention may also include a carry handle (1), which may be attached to the upper end of the housing (15) or diffuser (24). When the present invention is used for direct ventilation (no filtration) a safety cage (37) of the same dimensions as the filter (16) can be inserted into the filter housing (3) to protect people's fingers from the rotating fan (6), and the fan (6) from damage caused by foreign objects. The safety cage is fixed in-place by the lid (2).

Installation of the system may include a wind-blocking sheet (20), with an air inlet hole (35) and may or may not include a connecting ring (36) applied around the air inlet hole (35) that mates in a temporary, easily-removable, fashion with the docking ring (4). To improve the seal a soft foam ring may be added to the face of the docking ring (4). To improve the strength of the connection the connecting ring (36) and/or docking ring (4) may also be ferrous and/or magnetic. Magnets may be attached to the inlet guide opening (7), docking ring (4), or connecting ring (36). If a user wants a permanent installation then the docking ring (4) can be supplemented to include a locking connection with the connecting ring (36) via glue, snaps, screws, or some other mechanism. A transverse stiffener or damper (22) can be used in cases where the wind-blocking sheet (20) is too flexible or weak.

For embodiments with axial fans of large hub-to-tip ratio fan balancing is facilitated using perpendicular radial supports (26) with one or more slides (27), that move along the supports (26) to balance the fan. These supports are located on the inner-side of the fan's (6) hub (25), which has a hole at its center to facilitate mounting onto the motor's (13) output shaft and a circular array of holes to allow cooling air to reach the motor (13). The slides (27) are fixed with an adhesive. The upstream side of the hub (25) may include a curved guide cover (34) to improve the efficiency of the fan blades near their roots.

For embodiments having an axial fan (6) with a small hub-to-tip ratio the fan blade may be described as follows: the planar projection of a blade's leading (28) and trailing edge (29) is parabolic and the blade's root (30) and tip (31) are semi-circular. The blade airfoils are constructed using parabolic camber-lines projected onto cylindrical surfaces. The blades are of constant thickness in the circumferential direction and linearly-tapered in the radial direction (32).

High efficiency embodiments may include a horn-shaped inlet guide (7) with a streamlined cross-section, where the inlet guide (7) is located downstream of the docking ring (4) and on the inlet side of the housing (15). Such embodiments may also include a diffuser (24) located between the housing (15) and the filter (16), where the diffuser (24) has a smaller cross-sectional area on the housing (15) side and a larger cross-sectional area, which may be round or square, on the filter (6) side, and which utilizes a filter housing (3) to mount the filter (16). The diffuser's (24) smallest cross-section expands smoothly to its largest cross-section, which, all else constant, has the ultimate effect of increasing the total volumetric flow rate of air through the system. High efficiency embodiments with axial fans may also include a motor cover (14), which is a half ellipsoid or other continuous and smooth shape, with the open end attached to the inner ring (17) of the guide vanes (5) and an array of holes (141) to allow cooling air to flow over the motor. Such embodiments may also include guide vanes (5) with a uniform circumferential distribution where the motor supports or guide vanes (5) are supported on both ends by their connection to an inner (17) and outer ring (18), and where the motor (13) is connected to the inner ring (17), which is concentric with the outer ring (18), and the outer ring is embedded into the housing's (15) enlarged diameter portion such that its inner surface is flush with the inner surface of the housing (15).

For embodiments utilizing a centrifugal fan, the housing (15) has a volute shape and the motor (13) is mounted on one end of the housing (15), with the air inlet on the opposite end. The air inlet may be directly connected to the docking ring (4), or indirectly connected via a hose between the housing (15) and the docking ring (4).

Compared with the prior art, the invention has the following advantages:

1. Easy installation - some of the installation techniques do not require any special tools or equipment. As an example, one can simply remove an existing window screen and replace it with the provided wind-blocking sheet, which is transparent and flexible, securing the sheet with the screen's existing rubber strip and groove. The system is placed on the corresponding windowsill or shelf and the docking ring is aligned with the connecting ring using the height and tilt adjusters. The installation is finished; no holes were drilled or ducts installed. When an owner moves to a new location the system is easily taken away without causing any damage and the original window screen is reinstalled.

2. Easy to clean - the compact system is easily cleaned, just pull it away from the window, loosen one screw to remove the reusable prefilter, rinse the prefilter with water, slide the filter out, then use a damp cloth to wipe the internal surfaces. No need to climb any ladders or use special cleaning equipment.

3. High-flow rate ventilation - simply remove the filter, insert the safety cage, and run the system.

4. Passive ventilation - just move the system away from the window. The wind-blocking sheet has a round hole and a screen that allows air to naturally flow in-and-out of the window.

5. Desktop filtration - simply remove the machine from the window and set it on a desktop.

6. Desktop fan - simply remove the machine from the window and set it on a desktop, then replace the filter with a safety cage.

7. Energy efficiency - the careful aerodynamic design of the fan, guide vanes, diffuser, inlet, and motor cover allow the system to achieve high flow rates with low energy consumption. There are no aerodynamic losses associated with long ducts or bends.

8. Easy filter replacement- the filter is easy to replace, just pop-off the lid and slide the old filter out. Slide the new filter in - no need to turn any screws or climb any ladders.

9. Low-cost filter replacement - the filter has a standard size and shape, which allows a suitable filter to be easily obtained at low cost from multiple vendors.

LIST OF FIGURES

Figure 1 is a schematic drawing of a simple embodiment of the present invention in an exploded perspective view;
Figure 2 depicts the previous embodiment in an assembled perspective view;

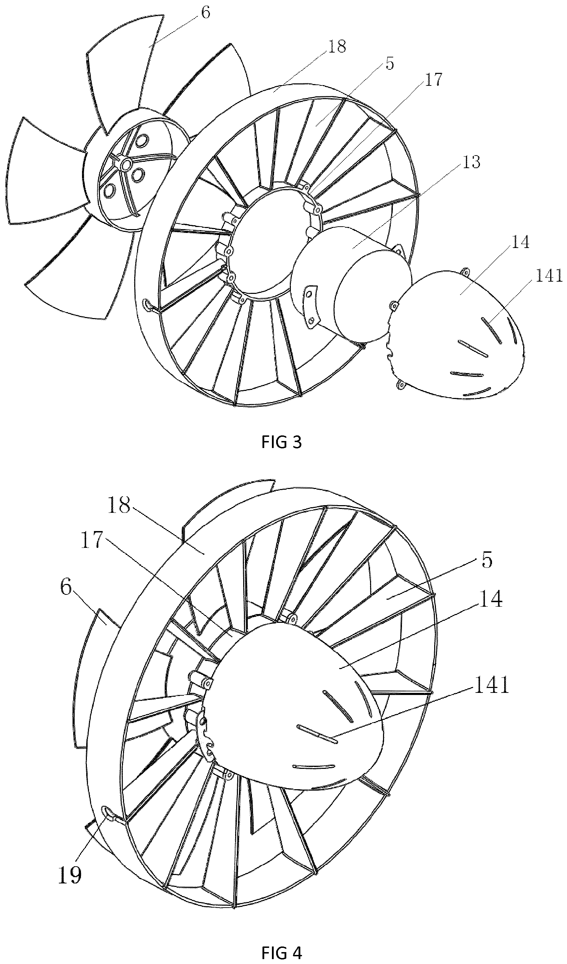

Figure 3 is a schematic drawing of the fan, motor, motor cover, and guide vane assembly in an exploded perspective view;
Figure 4 is an assembled version of the previous drawing;
Figure 5 is an inlet-side schematic drawing of the fan;
Figure 6 is a left side view of Figure 5;
Figure 7 is an inlet-side fan blade plot with the leading edge, trailing edge, root, and tip labeled;
Figure 8 is a perspective plot of one fan blade, with a cylindrical airfoil labeled;
Figure 9 is a schematic drawing of a fan for a long-diffuser embodiment of the present invention in an exploded perspective view;
Figure 10 is an enlarged view that illustrates the fan balancing technique for heavier fans;
Figure 11 is a schematic drawing of a high-efficiency embodiment of the present invention in an exploded perspective view;
Figure 12 is a perspective view showing the assembled structure of the Figure 11 embodiment;
Figure 13 is a front-view of the Figure 12 embodiment;
Figure 14 is the cross-sectional AA view from Figure13;
Figure 15 is a side view of another height and tilt adjustment mechanism for the present invention;
Figure 16 is a schematic view of the present invention installed with a flexible wind-blocking sheet;
Figure 17 depicts an embodiment of the present invention installed with a glass wind-blocking sheet; and
Figure 18 is a schematic diagram of the installed flexible wind-blocking sheet;
Figure 19 is a radial pressure distribution graph corresponding to early embodiments of the present invention;
Figure 20 is a perspective schematic structural view of the present invention's safety cage;
Figure 21 is a perspective view of a centrifugal fan embodiment of the present invention;
Figure 22 is a front-view (window side) of the embodiment in Figure 21;
Figure 23 is a left-view of the Figure 21 embodiment;
Figure 24 is a left view of another centrifugal embodiment of the present invention, which includes a hose.

LIST OF SYMBOLS

1- carry handle; 2- lid; 3 - filter housing; 4- docking ring; 5- motor supports/ guide vanes; 6- fan; 7-inlet; 8- speed adjustment knob; 9- prefilter ; 10- electrical control box cover; 11- height and tilt adjuster; 111- height adjustment mechanism ; 112- tilt adjustment mechanism; 12- electrical control box; 13- motor; 14- motor cover; 141- air vents (on the motor cover); 15- housing; 16- filter; 17 - inner ring; 18- outer ring; 19- electrical conduit; 20- wind-blocking sheet; 21- window frame; 22-damper/stiffener; 23- seat; 24- diffuser; 25- hub ; 26- rail; 27 - sliding balancer; 28- blade leading edge; 29 - blade trailing edge; 30- blade root; 31- blade tip; 32- blade airfoils; 33- hub ring; 34- hub dome; 341- vents (on the hub dome); 35- air inlet hole; 36- connecting ring; 37- safety cage; 38- hose; 39 - timer control knob; 40- windowsill/stand;

DETAILED DESCRIPTION

**1. Simple embodiment parts:**

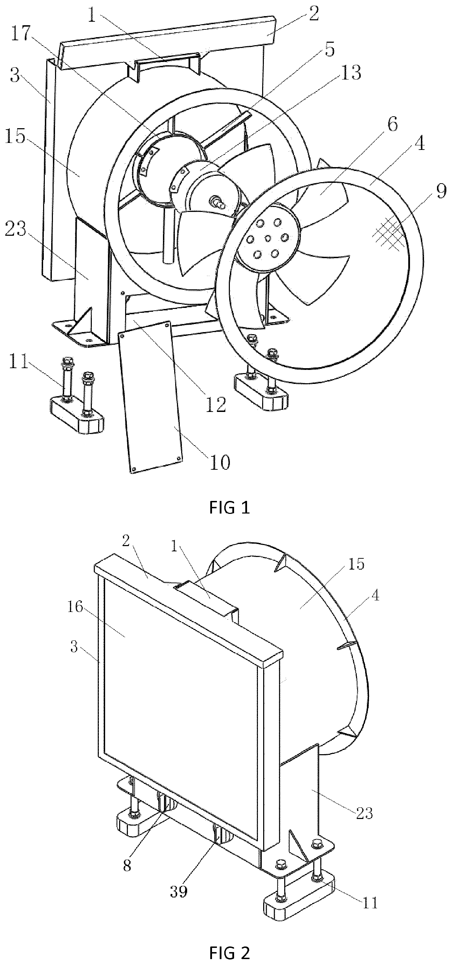

The present invention is a ventilating purifier, for which Figures 1, 2, 16, and 17 depict a simple embodiment. This simple embodiment includes an axial flow fan (6), a housing (15), a motor (13), and motor supports (5). For the embodiment in Figure 1 the motor supports (5) are radially-oriented bars that connect to a central ring onto-which the motor is secured using screws such that the motor (13) is fixed at the center of the housing (15) with its shaft-axis normal to the vertical plane. One of the motor supports (5) is modified to allow electrical wires to safely run from the electrical control box (12) to the motor (13); this support is called the electrical conduit (19). The electrical control box (12) has a cover (10) and a speed adjustment knob (8), as well as a timer control knob (39).

The fan (6) is mounted on the output shaft of the motor (13). There is a prefilter (9) upstream of the fan (6), which can consist of a stainless steel screen, and a filter (16) located downstream of the fan. The filter (16) is not limited to a HEPA filter, but a HEPA filter is preferred. Toward the outer edge of the prefilter (9) there is a docking ring (4). The system rests on a seat (23), which is located below the fan (6). Height and tilt adjusters (11) connect to the seat (23). The four threaded elements can be turned to provide minute adjustment of the height and tilt of the system, allowing the docking ring (4) to be easily aligned with the connecting ring (36) during installation. For special circumstances and applications, the height adjustment mechanism may consist of two tubes that can slide relative to one-another, increasing the total height adjustment range. The docking ring (4) in this embodiment has a circular shape, but it can be other shapes.

During operation air from outside is sucked through a prefilter (9). The prefilter (9) causes a loss of flow energy, but it also reduces turbulence in the outside air. Turbulence reduction partially offsets prefilter energy consumption because it improves fan (6) efficiency. The prefilter is an important component because it prevents premature clogging of the filter (16) due to insects, fibers, and large dust particles, and it provides protection for the fan (16), and people's fingers.

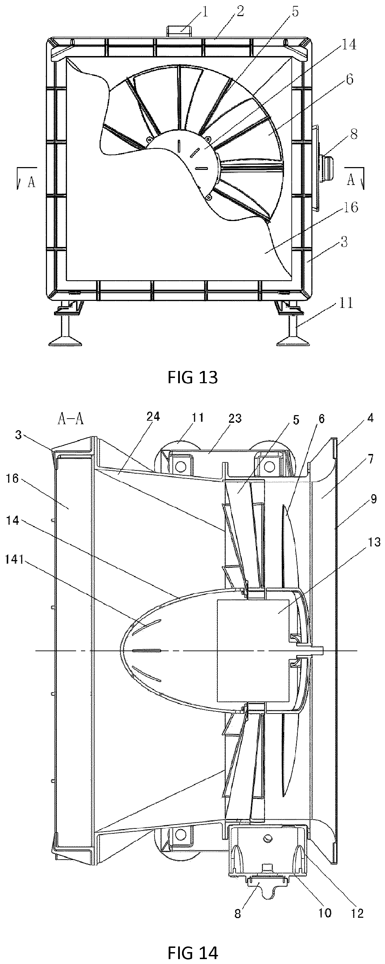

In the embodiments depicted in Figures 1, 2, 16, 17, and 11-14, the filter housing (3) is square to accommodate a standard square-shaped filter. The filter housing (3) has a lid (2) and a front lip that covers the front edges of the filter to hold it in place and to prevent dirty air from bypassing the filter (16), leaking into the building, and reducing overall air quality. For the simple embodiment of Figure 1 the lid (2) conveniently hinges about the carry handle (1) and is recessed to provide space for the filter (16).

The filter (16) can be easily installed into and removed from the filter housing (3) for replacement or cleaning by opening the lid (2) and sliding the filter (16) in or out. For example, the filter housing (3) can have a U shape whose inner-side has a groove for the filter (16) to slide into. The lid (2) is above the filter housing (3). The carry handle (1) is on the upstream side of the lid (2). The filter can also be removed to provide high flow-rate pure ventilation, which is useful when the outside air is relatively clean and rapid indoor ventilation is desired, or when the indoor temperature is less comfortable than the outdoor temperature. If there are small children or pets in the home then a safety cage (37) can replace the filter in its housing (3). The system can also include additional filters. Examples include more than one prefiltration layer or a non-mesh type prefilter upstream of the filter (6), as well as an activated carbon filter downstream of the filter (6), which is used to absorb odors and harmful chemical vapors. Further, the present invention may also include an electrical heating device to increase comfort during cold weather use. The system can be removed from the window and used on a desktop for pure filtration without ventilation, making it extremely versatile. Users are cautioned that the preferred technique is to filter incoming air before it enters a building, not after it has diffused throughout the building; the former is much more effective and efficient than the latter.

## 2. Additional high efficiency embodiment parts:

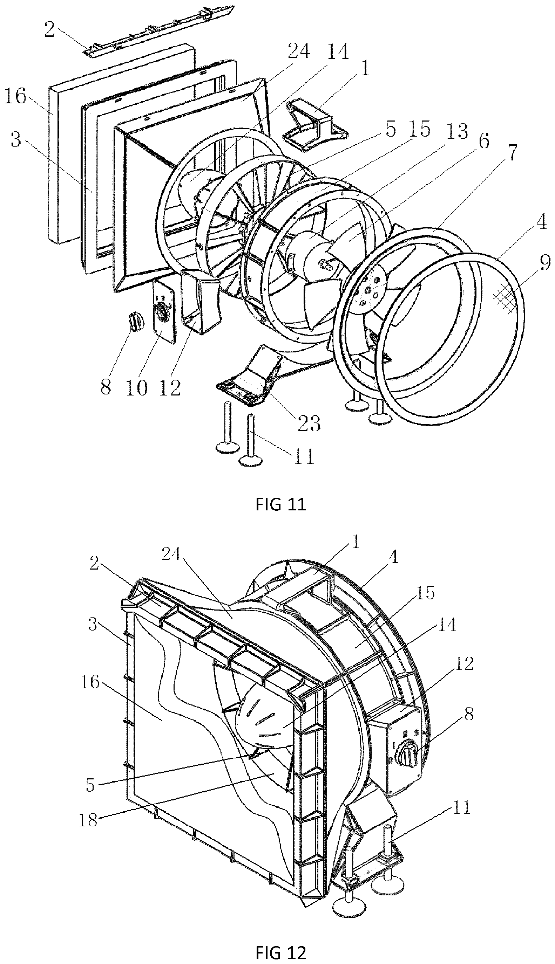

Based on the simple embodiment, the high efficiency embodiment is shown in Figures 11 - 14, with additional parts, such as the inlet (7), diffuser (24), motor cover (14), rails (26), a novel axial fan (6), and novel guide vanes (5). The novel axial fan (6) and guide vanes (5) lengthy inventive concept and experimental verification are described at the end of this section. The structure and function of the inlet (7), diffuser (24), motor cover (14) and rails (26) are described as follows:

The inlet (7) has a streamlined horn-like shape and it is located between the prefilter (9) and the housing (15). The inlet (7) accelerates the flow and allows the air to flow smoothly into the housing (15) preventing flow separation and reattachment near the housing's (15) otherwise sharp corners. The aforementioned phenomenon is called vena contracta, and it reduces the aerodynamic efficiency of the fan blades (6) near their tips. The net result is an improvement in system efficiency on the order of a few percent. The docking ring (4) here is the same as in the simple embodiment.

This embodiment includes a diffuser (24) located between the housing (15) and the filter (16). Air enters the diffuser (24) as it exits the guide vanes (5). The diffuser (24) is tapered; It has a smaller cross-sectional area on the housing (15) side and a larger cross-sectional area on the filter (6) side. If the diffuser (24) is too short then flow separation will result, leading to reduced efficiency. If the diffuser (24) is too long then the system will not balance over a windowsill/shelf without fixing or fastening its legs to the windowsill or shelf. In general, the greater the diffusion area ratio (outlet area divided by inlet area) the greater the required length to avoid flow separation. The diffusion area ratio can be increased without changing the outlet area by increasing the inlet area, which is essentially an annulus from the hub diameter of the fan (6) to the inner diameter of the housing (15). Diffuser (24) considerations encourage a smaller fan (6) hub diameter and a larger tip diameter than might otherwise be used. The diffuser's (24) length is selected ensure that fully-attached flow is maintained on the walls of the diffuser as the flow expands from the smallest cross-section to the largest cross-section of the diffuser (24). For this embodiment the downstream side of the diffuser (24) is square/rectangle and the upstream side is circular, with tapering in between. The diameter of the circle is no bigger than the side length of the downstream square/rectangle. A logical material choice for the diffuser (24) is plastic. For the embodiment of Figures 11-14 the preferred material for the filter housing (3) and lid (2) is also plastic; the lid (2) snaps in-place.

Said embodiment also utilizes a half ellipsoidal motor cover (14) whose open-end attaches to the guide vanes and whose closed end has air vents (141), which allow motor cooling air to flow out.. The flow rate of cooling air is very small, so it does not significantly reduce the efficiency of the entire system. The motor cover (14) has a continuous surface of continuous slope to avoid flow separation, helping the air downstream of the fan (6) to flow smoothly around the motor (13), thereby reducing flow resistance. Plastic is a logical material choice for the motor cover (14), as well as the other aerodynamic surfaces.

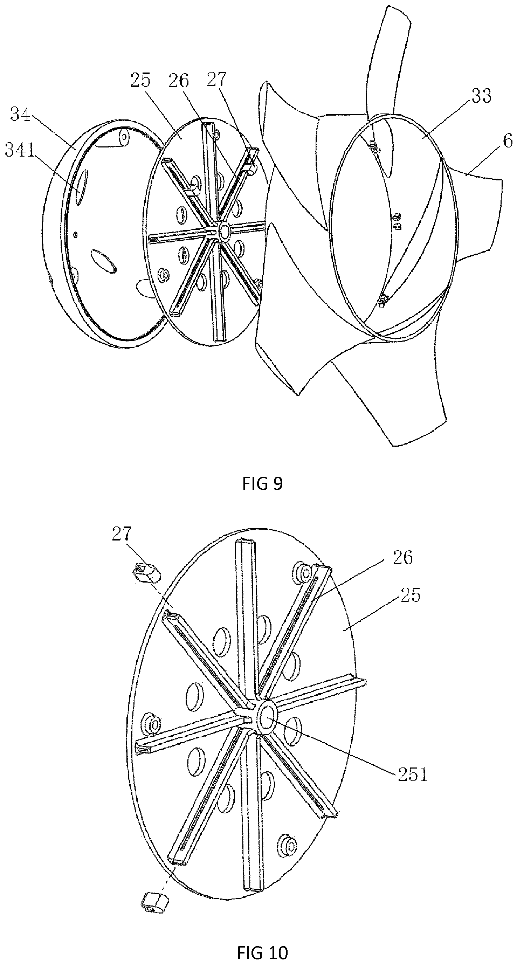

To balance the fan (6), a new approach was developed for the present invention, which includes hub rails (26), and sliding balancers (27), as depicted in Figures 9 and 10. Adhesive is applied to the sliding balancers (27), which snap into grooves on the rails (26). They slide along the rails until the fan is properly balanced. The fan hub (25) may be supplemented with a hub dome (341) to improve fan blade efficiency near their roots. The hub dome may have ventilation holes (341) to allow cooling air to reach the motor (13).

### 3. Centrifugal embodiment:

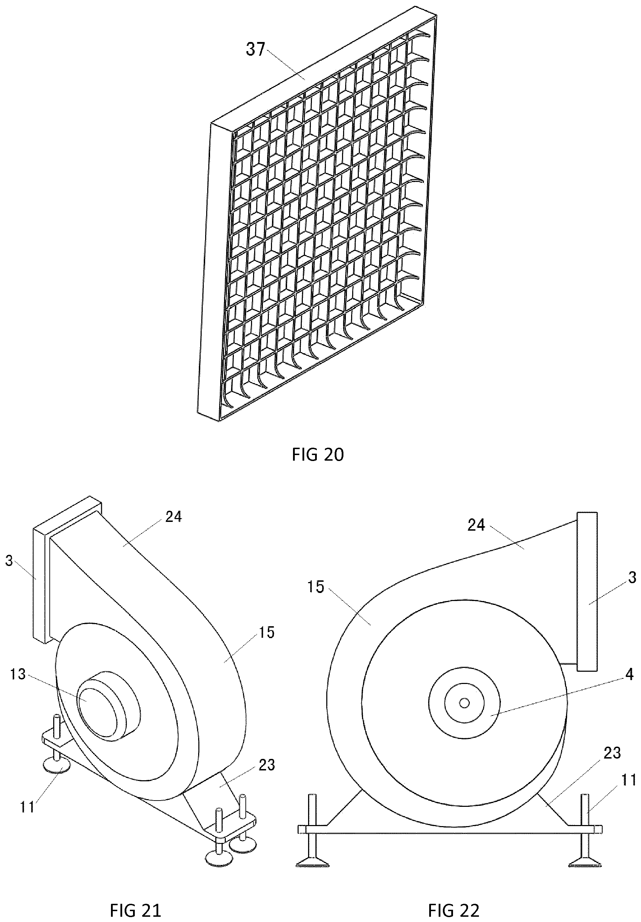

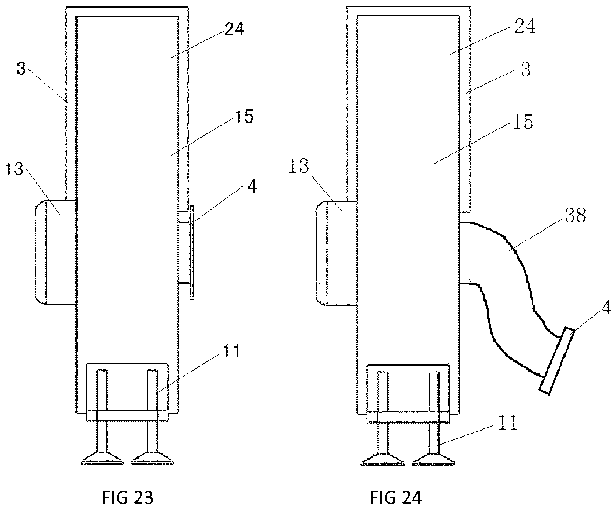

The present invention may utilize a centrifugal fan, as depicted in Figures 21 - 24. A centrifugal embodiment includes a housing (15), fan (6), and motor (13). It has a volute-shaped housing (15), with the motor (13) mounted near the center of one end of the housing (15) and a fan (6) mounted on the output shaft of the motor (13). The air inlet is on the opposite end of the housing (15). The inlet end has a docking ring (4) as seen in Figures 23-24, and may include a hose or inlet pipe (38). There is an integrated diffuser (24) downstream of the fan, which terminates at the filter housing (3).

### 4. Installation:

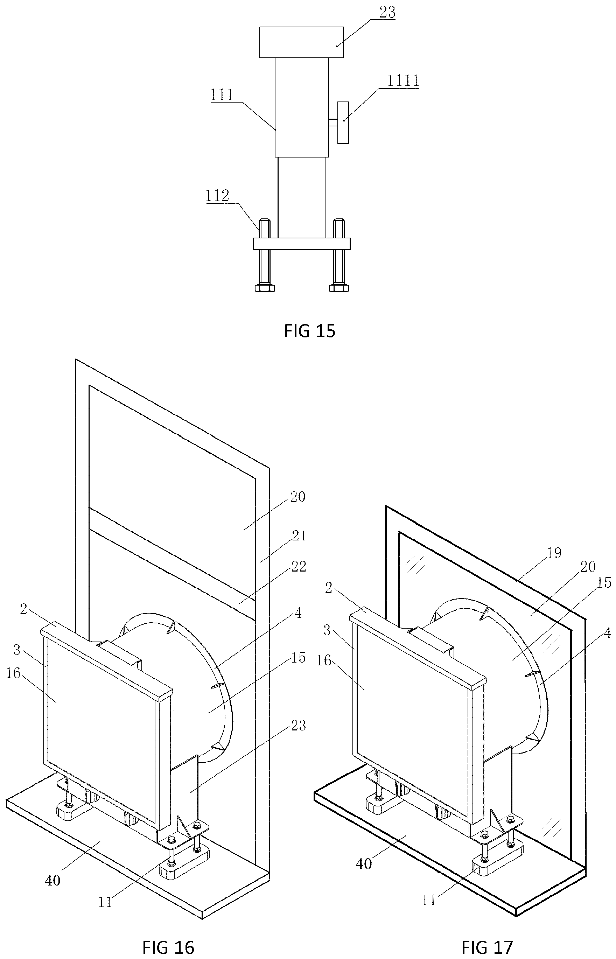

Installation of the system may include a wind-blocking sheet (20). The wind-blocking sheet (20) has an air inlet hole (35) and may include a connecting ring (36) applied around the air inlet hole (35) that mates in a temporary, easily-removable, fashion with the docking ring (4). The function of the wind-blocking sheet (20) is to safely install and cover the window, allowing ventilation only through the air inlet hole (35). Preferred materials for the wind-blocking sheet are transparent, and may include: glass, rigid plastic, or a flexible material made from a relatively thin film. Figure 17 depicts a glass installation, while Figure 16 corresponds to a flexible film. As a particular example consider a "do-it-yourself' installation using a thin flexible material. The material can be received in a roll with the air inlet hole (35) pre-cut and the connecting ring (36) already attached. The sheet (20) is then cut to the necessary frame-size using scissors. An existing window screen is removed, and its rubber strip and groove are utilized to tension and mount the flexible wind-blocking sheet (20). If necessary, tape is used to keep the rubber strip in-place. The system is then set on the corresponding windowsill or shelf. The height and tilt adjusters are used to align the docking ring (4) with the connecting ring (36). In this way, a thin flexible wind-blocking sheet (20) has facilitated easy no-cost installation of an excellent ventilation purifier without the need to drill any holes or install complicated room-to-room ducting. There is no damage to the window, its frame, or any other part of the building. To return the window to its original condition simply remove the unit and the tape (if used), and reinstall the old window screen.

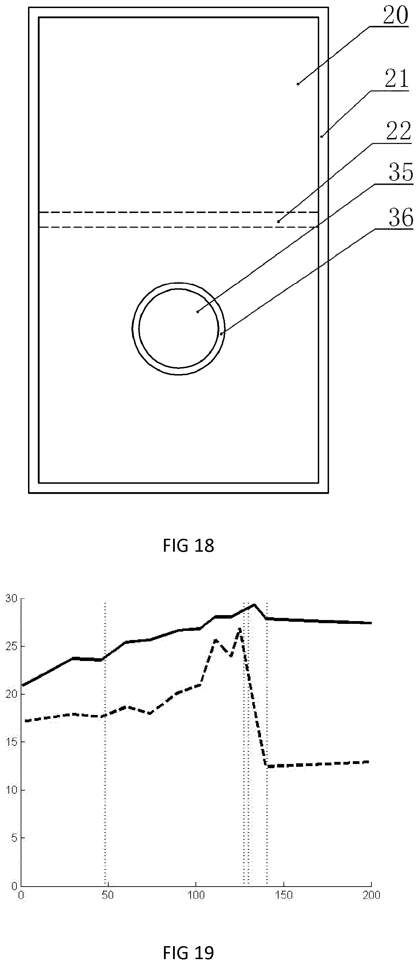

Next, the present invention can be set on a windowsill/stand (40), aligning its docking ring (4) with the connecting ring (36), by adjusting its height and tilt adjuster. The connecting ring (36) may be of any rigidity. The connecting ring (36) and/or docking ring (4) may be ferrous and/or magnetic such that they pull on each other. One particular example is for the connecting ring (36) to consist of a ferrous material while the docking ring (4) includes magnets embedded in it, or is made of a magnetic material. For cases where a permanent installation is desired it is recommended to use glass with an air inlet hole (35) cut into it, as seen in Figure 17. For a permanent flexible installation the docking ring (4) can have a locking connection with the connecting ring (36) via glue, double-sided tape, snaps, screws, or some other mechanism. A transverse stiffener or damper (22), as depicted in Figures 16 and 18, can be used when the wind-blocking sheet (20) is flexible or weak relative to the applied wind-loading, which is likely to occur when the area of the window is large and/or the local area is particularly windy.

### 5. Novel fan design:

The fan (6) is designed such that incoming air approaches nearly tangent to its blade leading edges and flows smoothly over the blades without separation. The precise shape of the blades is designed to maximize efficiency. As air passes through the fan it undergoes a necessary rise in static pressure, which ultimately drives flow through the filter (16). Due to its rotation, the fan (6) also introduces a circumferential velocity component, which is undesirable as it does not contribute to axial flow through the filter.

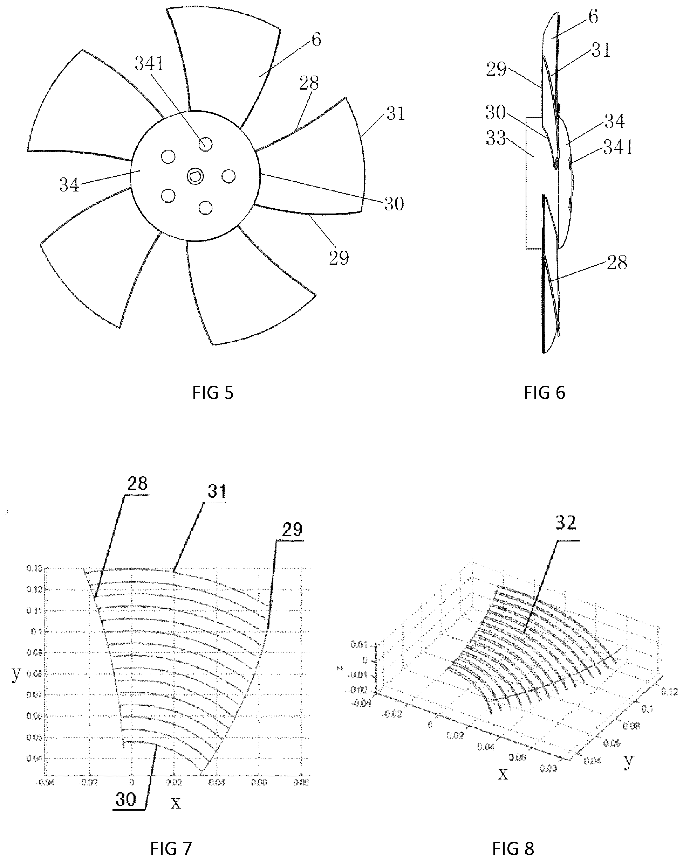

The fan (6) is depicted in Figures 5 through 8. Said fan (6) is custom-designed with parabola-based airfoil camber-lines that are projected onto cylindrical surfaces. These cylindrical airfoils (32) are shown in Figure 8, where the X axis represents a substantially circumferential direction, Y a substantially radial direction, and Z the axial direction (air flows from high to low Z). The blades are forward-swept; their thickness is constant in the circumferential direction and linearly-tapered in the radial direction. The leading (28) and trailing (29) edges of each blade are parabolic when projected onto a vertical plane, as seen in Figures 5 and 7, as given by: $x_{LE} = -1.972y_{LE}^2 + 0.115y_{LE} - 0.005$ and $x_{TE} = -3.615y_{TE}^2 + 0.945y_{TE} - 0.005$. Leading and trailing edges are rounded. Under the same vertical-plane projection the root (30) and tip (31) of each blade is a semi-circle (Figures 5 and 7). The blade design of the fan (6) differs from conventional designs. Conventional axial fans with a diameter of approximately 25 cm, a hub diameter of approximately 10 cm, and rotational speeds of approximately 1200 RPM, may have root-to-tip pitch angles of about 15.1 to 38.7 degrees for a total twist of about 23.6 degrees. For the custom fan of Figures 5 - 8 pitch angles vary from 69.3 - 74.7 degrees for a total twist of 5.4 degrees. Comparing experimentally-determined efficiencies for the simple embodiment of Figure 1 (in watts per cubic meter per minute, a national standard) the custom fan design improves system performance by approximately 28%.

Embodiments with longer diffusers can tolerate higher fan hub-to-tip ratios without flow separation, allowing higher static pressures and flow rates to be achieved. Such embodiments can also be designed to operate well over a broader range of flow speeds by utilizing more-complex airfoils with non-uniform thickness distributions. For such embodiments the axial fan becomes relatively heavy, and its mass is distributed further away from the axis of rotation. As a result, such fans can be difficult to balance. A new approach was developed that includes hub rails (26) and sliding balancers (27), as depicted in Figures 9 and 10. Adhesive is applied to the sliding balancers (27), which snap into grooves on the rails (26). The sliding balancers (27) slide along the rails (26) until the fan is properly balanced. The fan hub (25) may be supplemented with a hub dome (341) to improve fan blade efficiency near their roots. The hub dome may have ventilation holes (341) to allow cooling air to reach the motor (13).

**6. Novel guide vane design:**

For the high efficiency embodiment depicted in Figure 11 the motor supports (5) have been replaced with guide vanes (5). As air leaves the fan blades it approaches these guide vanes (5), which were designed such that the oncoming flow approaches tangent to a vane's leading edge and exits the vane's trailing edge in the purely axial direction. The guide vanes (5) utilize NACA 4-digit series airfoils with maximum camber located at three-tenths of the chord-length aft of the airfoil leading-edge. The chord-length tapers linearly from vane tip-to-root while vane thickness is held constant, except at the rounded leading and trailing edges. Guide vanes improve efficiency by recovering swirl energy downstream of the fan (converting unproductive circumferential velocity into axial velocity). To design the guide vanes two unique equations were derived having the following parameters: m is maximum airfoil camber in tenths of chord, V is axial flow speed, Vc is post-fan circumferential flow speed, $\square$p is the static pressure rise across the fan, $\square$ is air density, and U is the velocity of the rotating fan blade, which is a function or radial position and fan rotation rate. The first unique equation is: m = 0.105 · δ, where $\delta = \mathrm{atan}\left(\frac{V_c}{V}\right)$ and the other equation was derived to estimate the post-fan circumferential flow speed, as: $V_c \cong 0.154 \frac{\Delta p}{\rho \cdot U}$. Shape details for the guide vanes (5) (beyond having the proper inlet and outlet angles) are not as important as those of the fan (6). The guide vanes (5) are stationary, causing the flow speed over them to be relatively low. As a result, their shape-effect on system efficiency is reduced. The number of guide vanes (5) is selected to ensure three criterion: (1) that they successfully impose their geometry on the flow, (2) that they adequately support the weight of all mounted components, and (3) that their material use is not excessive. One of the guide vanes (5) is hollow with thick symmetric airfoils. Its trailing edge is left open to allow electric wires to run safely from the electric control box (12) to the motor (13) without creating a flow disturbance.

**7. Experimental Results:**

To verify the performance of the system an initial simple and high efficiency prototype were produced and tested alongside a commercial desktop filter. The method for comparison was volumetric flow rate through the filter divided by power consumption in watts, which is an industry standard. This is not a very fair comparison between desktop purifiers and ventilating purifiers, as the technique of filtering incoming air is much more efficient than the technique of letting dirty air enter and then trying to clean it using a desktop filter (after it has diffused throughout a space).

Table 1 compares two early prototypes of the present invention during operation, where mean power consumption is presented in watts (W). Supply voltage from the national grid fluctuates, so values are adjusted to correspond to 220V.

Table 1: Average power consumption (W)

| Power setting | 1 (low) | 2 (medium) | 3 (high) |
|---|---|---|---|
| Simple present invention | 22.9 | 26.5 | 35.0 |
| Efficient type of the present invention | 22.1 | 26.4 | 35.2 |

Table 2 compares the performance of different filtration systems having the same nominal power and voltage for their motors. Niu Kee is a typical commercially-available desktop filtration system.

Table 2: Flow-rate (m3 / mm) through a HEPA filter for different systems at the same nominal power

| Power setting | 1 (low) | 2 (medium) | 3 (high) |
|---|---|---|---|
| Niu Kee purifier (HEPA filter only) | - | - | 1.00 |
| best tested HEPA strapped to a desktop fan combination | - | - | 1.23 |
| A simple prototype of the invention (Fig. 1) | 1.44 | 1.82 | 2.18 |
| A high-efficiency prototype of the invetion (Fig 11) | 2.11 | 2.62 | 3.06 |

Figure 19 shows pressure distribution along the radial direction at power-setting 2. Radial distance from the center of the fan is given along the x-axis in mm; pressure difference across the filter (16) is given on the y-axis in Pa. The thick solid line corresponds to the high efficiency embodiment, while the thick dotted line corresponds to the simple embodiment both at power-setting 2. Vertical dashed lines denote key radial positions: x = 48.5 is the radius of the fan hub, r = 127.5 is the radius of the fan blade tips, r = 130 is the inner radius of the housing (15), r = 141 is the perpendicular distance between the shaft center and one side of the square-shaped filter housing (3), r = 199.4 mm is the distance from the shaft center to a corner of the square-shaped filter housing (3).

The flow speed through the filter is proportional to the pressure difference across it, as given on the y-axis of Figure 19. Integration of the pressure difference across the entire frontal area of the filter yields the total volumetric flow rate of air passing through the filter. A higher pressure difference, all-else being equal, implies better system performance. Pressure distribution uniformity is desirable because more uniform particle capture is associated with longer filter life.

8. Disclaimer:

All above examples and discussion are merely to illustrate the technical concepts and features of the present invention, with the aim of enabling one of ordinary skill in the art to understand and implement the present invention, and not to limit the scope of the present invention. Any changes or modifications in accordance with the equivalent substance made by the present invention should fall within the scope of the present invention.

**Claims**

1.  An air purifier that includes an electric fan where the electric fan comprises a housing (15), a fan (6), and a motor (13), the air purifier is equipped with a prefilter (9) and a main filter (16) upstream and downstream of the electric fan, respectively, further **characterized by** a docking ring (4) at the outer edge of the inlet side of the electric fan, and a seat (23) below.

2.  An air purifier according to claim 1, **characterized by** said fan being an axial fan where the fan (6) is mounted on the output shaft of the motor (13), and the motor is held in the center of the cylindrical housing (15) by supports or guide vanes (5) that are located upstream or downstream of the fan (6).

3.  An air purifier according to claim 1, **characterized by** a horn-shaped inlet (7) downstream of the docking ring (4) and at the inlet side of the housing (15). The inlet's (7) axial cross-section is streamlined.

4.  An air purifier according to claim 1, **characterized by** a diffuser (24) located between the housing (15) and the filter (16), where the diffuser (24) has a smaller cross-sectional area on the housing (15) side and a larger cross-sectional area, which may be round or square, on the filter (16) side, and which utilizes a filter housing (3) where the filter (16) is mounted; the diffuser's (24) smallest cross-section expands smoothly to its largest cross-section, which, all else constant, has the ultimate effect of increasing the total volumetric flow rate of air through the system.

5.  An air purifier according to claim 4, **characterized by** the filter (16) being capable of filtering PM 2.5, slides into the filter housing (3), and is fixed in-place by the lid (2).

6.  An air purifier according to claim 4, **characterized by** a safety cage (37) of the same dimensions as the filter (16), which replaces the filter (16) during forced ventilation without filtration in order to protect people's fingers from the rotating fan (6), and the fan (6) from damage caused by foreign objects, the safety cage (37) slides into the filter housing (3) in the same manner as the filter (16) and is fixed in-place by the lid (2).

7. An air purifier according to claim 2, **characterized by** a carry handle (1) attached to the upper end of the housing (15).

8. An air purifier according to claim 2 **characterized by** motor supports or guide vanes (5) with a uniform circumferential distribution where the motor supports or guide vanes (5) are supported on both ends by their connection to an inner (17) and outer ring (18), and where the motor (13) is connected to the inner ring (17), which is concentric with the outer ring (18), and the outer ring is embedded into the housing's (15) enlarged diameter portion such that its inner surface is flush with the inner surface of the housing (15).

9. An air purifier according to claim 2, **characterized by** the inner-side of the fan's (6) hub (25), which has circumferentially uniform radial rails (26) with one or more sliding balancers (27), that move along the rails (26) to balance the fan; the hub (25) has a central hole to facilitate mounting onto the motor's (13) output shaft; the sliding balancers (27) are fixed with an adhesive; the upstream side of the hub (25) may include a hub dome (34).

10. An air purifier according to claim 2, **characterized in that** the planar projection of a fan blade's leading (28) and trailing edges (29) are parabolic with semi-circular blade roots (30) and tips (31) and the blade's airfoil (32) are constructed using parabolic camber-lines projected onto cylindrical surfaces, where the blades are of constant thickness in the circumferential direction and linearly-tapered in the radial direction; the planar projection for the blade leading edge is:

$$x_{LE} = -1.972 y_{LE}^2 + 0.115 y_{LE} - 0.005,$$

and for the trailing edge it is:

$$x_{TE} = -3.615 y_{TE}^2 + 0.945 y_{TE} - 0.005.$$

11. An air purifier according to claim 2, **characterized in that** the fan's (6) blade pitch angle is 69.3 degrees at the root and increases to 74.7 degrees at the blade tip, where blade pitch angle is defined between the axial (motor-shaft) direction and an airfoil chord-line; the total twist is the difference between the tip and root pitch angles - 5.4 degrees; the corresponding guide vanes (5) have NACA 4-digit series based camber-lines with constant blade thickness and linearly tapered chord-lengths from tip-to-root, the maximum guide vane (5) camber is given by: m = 0.105 · $\delta$, where $\delta = \text{atan}\left(\frac{V_c}{V}\right)$ and V is the axial velocity, Vc the circumferential speed of the fan blade.

12. An air purifier according to claim 2, **characterized by** a motor cover (14), which is a half ellipsoid or other continuous curvature on smooth shape, opening fixed to the guide vane (5) of the inner ring (17) or the front end of the rod support, backend oval top end toward the fan out of the wind with ventilation in the motor cover (14) air vent (141).

13. An air purifier according to claim 1, is **characterized in that** said fan is a centrifugal fan, whose assembly consists of a housing (15), the fan (6) and the motor (13), where: the fan (6) is mounted on the output shaft of the motor (13), the housing (15) has a volute shape, the motor (13) is mounted on one end of the housing (15), and the air inlet is on the opposite end of the housing (15), which is either directly connected to the docking ring (4), or is indirectly connected via a hose between the housing (15) and the docking ring (4).

14. An air purifier according to claim 1, **characterized by** a seat (23), which is provided with a height and level adjuster (11).

15. An air purifier according to claim 14, wherein the ventilation purifier is **characterized by** the height and level adjuster (11) consisting of two pairs of threaded elements symmetrically disposed about the seat (23).

16. An air purifier according to claim 14, wherein the ventilation purifier is **characterized by** the height and level adjuster (11) having a height adjustment mechanism (111) and a level adjustment mechanism (112), where the height adjustment mechanism (111) includes an inner and outer tube that can slide relative to one another and the level adjustment mechanism (112) consists of four threaded elements connected to the bottom of the height adjustment mechanism (111).

**17.** An air purifier according to claim 1, **characterized by** a wind-blocking sheet (20), with an air inlet hole (35) and may or may not include a connecting ring (36) applied around the air inlet hole (35) that mates with the docking ring (4).

**18.** An air purifier according to claim 17, **characterized by** the connecting ring (36) and/or docking ring (4) being ferrous or magnetic, or having magnets attached to the inlet (7), docking ring (4), or connecting ring (36), or the docking ring (4) having a locking connection with the connecting ring (36).

**19.** An air purifier according to claim 17, **characterized in that** the wind-blocking sheet (20) has a transverse stiffener or damper (22) to support flexible or weak materials against high wind loads.

FIG 1

FIG 2

6
18
5
17
13
14
141

FIG 3

18
17
6
5
14
141
19

FIG 4

FIG 5

FIG 6

FIG 7

FIG 8

FIG 9

FIG 10

FIG 11

FIG 12

FIG 13

FIG 14

FIG 15

FIG 16

FIG 17

FIG 18

FIG 19

37

FIG 20

24

3

15

13

23

11

FIG 21

24

15

3

4

23

11

FIG 22

FIG 23    FIG 24

# INTERNATIONAL SEARCH REPORT

| International application No. |
|---|
| **PCT/CN2016/098851** |

**A. CLASSIFICATION OF SUBJECT MATTER**

E06B 7/02 (2006.01) i; F04D 25/08 (2006.01) i; F04D 29/70 (2006.01) i; F24F 13/28 (2006.01) i

According to International Patent Classification (IPC) or to both national classification and IPC

**B. FIELDS SEARCHED**

Minimum documentation searched (classification system followed by classification symbols)

E06B, F24F, F04D

Documentation searched other than minimum documentation to the extent that such documents are included in the fields searched

Electronic data base consulted during the international search (name of data base and, where practicable, search terms used)

CNABS, VEN, CNPAT, WPI, EPODOC, CNTXT, CNKI: electric fan, filter screen, ventilate, clean, motor cover, pitch angle, air intake, air outgoing, axial flow, volute, fan?, window?, cleaner?, cleaning cartridge?, eliminator?, filter?, air+, motor, guide, impeller, cover, diffus+, hole, angle, axis, snail, worm, radial, support

**C. DOCUMENTS CONSIDERED TO BE RELEVANT**

| Category* | Citation of document, with indication, where appropriate, of the relevant passages | Relevant to claim No. |
|---|---|---|
| X | CN 203823980 U (SHAOSHAN XINGJI ELECTRIC CO., LTD.), 10 September 2014 (10.09.2014), description, paragraphs [0011]-[0013], and figure 1 | 1, 4-6, 13-19 |
| Y | CN 203823980 U (SHAOSHAN XINGJI ELECTRIC CO., LTD.), 10 September 2014 (10.09.2014), description, paragraphs [0011]-[0013], and figure 1 | 2-3, 7-9, 12 |
| Y | CN 204476878 U (WU, Tangjun), 15 July 2015 (15.07.2015), description, paragraphs [0012]-[0014], and figure 1 | 2-3, 7-9, 12 |
| PX | CN 205172379 U (WU, Ruixia), 20 April 2016 (20.04.2016), description, paragraphs [0057]-[0080], and figures 1-24 | 1-19 |
| PX | CN 105089465 A (WU, Ruixia), 25 November 2015 (25.11.2015), claims 1-19 | 1-19 |
| A | JP S6451117 A (MATSUSHITA ELECTRIC IND. CO., LTD.), 27 February 1989 (27.02.1989), the whole document | 1-19 |

☒ Further documents are listed in the continuation of Box C. ☒ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 06 December 2016 (06.12.2016) | **12 December 2016 (12.12.2016)** |

| Name and mailing address of the ISA/CN: | Authorized officer |
|---|---|
| State Intellectual Property Office of the P. R. China<br>No. 6, Xitucheng Road, Jimenqiao<br>Haidian District, Beijing 100088, China<br>Facsimile No.: (86-10) 62019451 | **NIE, Chunyan**<br>Telephone No.: (86-10) **82245905** |

Form PCT/ISA/210 (second sheet) (July 2009)

## INTERNATIONAL SEARCH REPORT

| International application No. |
| --- |
| **PCT/CN2016/098851** |

**C (Continuation).**     **DOCUMENTS CONSIDERED TO BE RELEVANT**

| Category* | Citation of document, with indication, where appropriate, of the relevant passages | Relevant to claim No. |
| --- | --- | --- |
| A | US 7094142 B1 (MASKELL, T.J.), 22 August 2006 (22.08.2006), the whole document | 1-19 |

Form PCT/ISA/210 (continuation of second sheet) (July 2009)

## INTERNATIONAL SEARCH REPORT
### Information on patent family members

International application No.

**PCT/CN2016/098851**

| Patent Documents referred in the Report | Publication Date | Patent Family | Publication Date |
|---|---|---|---|
| CN 203823980 U | 10 September 2014 | None | |
| CN 204476878 U | 15 July 2015 | None | |
| CN 205172379 U | 20 April 2016 | None | |
| CN 105089465 A | 25 November 2015 | None | |
| JP S6451117 A | 27 February 1989 | None | |
| US 7094142 B1 | 22 August 2006 | None | |

Form PCT/ISA/210 (patent family annex) (July 2009)